# EUROPÄISCHE PATENTSCHRIFT

(11) **EP 3 281 178 B1**
(45) Veröffentlichungstag und Bekanntmachung des Hinweises auf die Patenterteilung: **23.07.2025**
(21) Anmeldenummer: 16713853.6
(22) Anmeldetag: 30.03.2016
(51) Int. Cl.: G06T 15/20, B60R 1/00, G06T 15/50

(54) **VERFAHREN ZUR DARSTELLUNG EINER FAHRZEUGUMGEBUNG EINES FAHRZEUGES**
METHOD FOR DISPLAYING AN AREA SURROUNDING A VEHICLE
PROCÉDÉ DE REPRÉSENTATION D'UN ENVIRONNEMENT D'UN VÉHICULE

(30) Priorität: 10.04.2015 DE 102015206477
(43) Veröffentlichungstag der Anmeldung: 14.02.2018
(73) Patentinhaber: Robert Bosch GmbH, 70442 Stuttgart (DE)
(72) Erfinder: ESPARZA GARCIA, Jose Domingo, 70178 Stuttgart (DE); CANO, Raphael, 70180 Stuttgart (DE)
(86) Internationale Anmeldenummer: PCT/EP2016/056863
(87) Internationale Veröffentlichungsnummer: WO 2016/162245

(56) Entgegenhaltungen:
- EP-A1- 1 179 958
- EP-B1- 1 179 958
- WO-A1-2008/150153

## Beschreibung

### Stand der Technik

Die vorliegende Erfindung betrifft ein Verfahren zur Darstellung einer Fahrzeugumgebung eines Fahrzeuges.

Fahrassistenzsysteme zielen darauf ab, einen Fahrer beim Führen eines Fahrzeuges zu unterstützen. Ein solches Unterstützen des Fahrers kann beispielsweise durch die folgenden Funktionen erfolgen:
- Darstellen einer Umgebung im Nahbereich des Fahrzeuges, um Zusammenstöße mit Hindernissen zu vermeiden, die nicht im unmittelbaren Blickfeld des Fahrers liegen,
- Übernehmen einige Aufgaben des Fahrers, um den Fahrkomfort für den Fahrer zu erhöhen,
- Überwachen von Aktivitäten des Fahrers und Eingreifen bei Gefahrensituationen, und/oder
- automatisiertes Fahren ohne die notwendige Anwesenheit des Fahrers.

Insbesondere betrifft die vorliegende Erfindung ein Verfahren zum Darstellen einer Fahrzeugumgebung mittels einer zusammengesetzten Ansicht, wie dies insbesondere in sogenannten Surround-View-System erfolgt. In solchen Surround-View-System sind typischerweise mehrere Kameras derart an einem Fahrzeug angeordnet, dass eine Darstellung einer 360°-Umsicht der Fahrzeugumgebung ermöglicht wird. Dabei werden typischerweise Kamerabilder von an dem Fahrzeug angeordneten Kameras, typischerweise vier Kameras, auf eine geometrische Projektionsfläche projiziert, die typischerweise eine Form einer Schüssel aufweist. Dies erfolgt mittels einer Bildpunktzuweisung (Image-Mapping), welche auf einer intrinsischen und einer extrinsischen Kamerakalibrierung basiert.

DE102011121473A1 offenbart ein Verfahren zum Anzeigen von Bildern auf einer Anzeigeeinrichtung eines Kraftfahrzeugs durch Erfassen eines Kamerabildes eines Umgebungsbereichs des Kraftfahrzeugs mittels einer Kamera des Kraftfahrzeugs.

US2014/0139676A1 offenbart ein Sichtsystem für ein Fahrzeug, welches wenigstens einen Bildsensor, eine Steuerung und eine Anzeige umfasst.

EP1179958A1 offenbart eine Vorrichtung zur Bildverarbeitung, bei der Bereiche mit einem vorgegebenen Abstand zu einem Fahrzeug weichgezeichnet dargestellt werden.

WO2008150153A1 offenbart ein Verfahren zum Erzeugen einer Panorama-Ansicht, bei der eine Fahrzeugumgebung durch eine Anordnung von 3D-Punkten dargestellt wird.

### Offenbarung der Erfindung

Das erfindungsgemäße Verfahren zur Darstellung einer Fahrzeugumgebung eines Fahrzeuges umfasset ein Erfassen der Fahrzeugumgebung in Kamerabildern mittels mehrerer Kameras, ein Projizieren der Kamerabilder auf eine geometrische Projektionsfläche in einem virtuellen Raum, ein Erstellen einer Tiefenkarte für einen Sichtbereich einer virtuellen Kamera, welche einen Abstand mehrerer Punkte der geometrischen Projektionsfläche zu der virtuellen Kamera in dem virtuellen Raum beschreibt, ein Errechnen eines Bildes der virtuellen Kamera, welches die geometrische Projektionsfläche in dem virtuellen Raum abbildet, ein Ermitteln eines bestimmten Bereiches des Bildes der virtuellen Kamera basierend auf der Tiefenkarte, in dem die geometrische Projektionsfläche in einem bestimmten Abstandsbereich gegenüber der virtuellen Kamera liegt, und ein Weichzeichnen des Bildes der virtuellen Kamera in dem Bereich, in dem der bestimmte Bereich abgebildet wird.

Auf diese Weise wird ein Blick des Fahrers bei einem Betrachten des errechneten Bildes geführt. Insbesondere werden auch unbeabsichtigte Unterschiede zwischen dem Bild der virtuellen Kamera und der durch diese abgebildeten Fahrzeugumgebung, die in dem bestimmten Bereichen der geometrischen Projektionsfläche liegen, weichgezeichnet und somit verborgen. Solche unbeabsichtigten Unterschiede ergeben sich mitunter daraus, dass die geometrische Projektionsfläche in dem virtuellen Raum in ihrer Form nicht genau die Fahrzeugumgebung widergibt.

Die Unteransprüche zeigen bevorzugte Weiterbildungen der Erfindung.

Es ist vorteilhaft, wenn die geometrische Projektionsfläche basierend auf der Fahrzeugumgebung modelliert wird. Somit werden unbeabsichtigte Unterschiede zwischen dem Bild der virtuellen Kamera und der durch diese abgebildeten Fahrzeugumgebung minimiert.

Auch ist es vorteilhaft, wenn der bestimmte Abstandsbereich ein Bereich ist, der sich außerhalb eines minimalen Abstandes gegenüber der virtuellen Kamera erstreckt. Somit wird ein Tiefeneffekt geschaffen und das Bild der virtuellen Kamera wirkt besonders plastisch.

Ferner ist es vorteilhaft, wenn in dem virtuellen Raum ein virtuelles Modell des Fahrzeuges angeordnet ist, und die Tiefenkarte derart erstellt wird, dass in dem virtuellen Raum ein virtuelles Modell des Fahrzeuges angeordnet ist, und die Tiefenkarte derart erstellt wird, dass diese für solche Bereiche des Bildes der virtuellen Kamera, in denen das virtuelle Modell 14 des Fahrzeuges 1 erfasst wird, einen Abstand der in diesen abgebildeten Punkte des virtuellen Modells 14 des Fahrzeuges 1 zu der virtuellen Kamera beschreibt. Das virtuelle Modell des Fahrzeuges gibt einem Anwender einen Bezugspunkt in dem Bild der virtuellen Kamera. Durch das Berücksichtigen des virtuellen Modells des Fahrzeuges bei dem Erstellen der Tiefenkarte fügt sich dieses in das Bild der virtuellen Kamera ein und wird somit nicht als ein Fremdkörper in der Fahrzeugumgebung wahrgenommen.

Auch ist es vorteilhaft, wenn das Verfahren ein Ausrichten der virtuellen Kamera auf einen bestimmten Punkt von Interesse in dem virtuellen Raum umfasst. Auf diese Weise kann die Aufmerksamkeit des Anwenders auf den bestimmten Punkt gerichtet werden.

Zudem ist es vorteilhaft, wenn der bestimmte Punkt von Interesse ein Punkt ist, an dem eine Annäherung des Fahrzeuges an ein Objekt erfolgt. Somit wird der Anwender auf diese Annäherung hingewiesen und Kollisionen können verhindert werden.

Eine Vorrichtung, die dazu eingerichtet ist, das erfindungsgemäße Verfahren auszuführen, ist ebenfalls vorteilhaft und weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm des erfindungsgemäßen Verfahrens in einer ersten Ausführungsform,
- Figur 2: ein Fahrzeug mit einer Vorrichtung zum Ausführen des Verfahrens in der ersten Ausführungsform,
- Figur 3: ein Bild einer virtuellen Kamera, wobei kein Weichzeichnen von vorbestimmten Bereichen von Kamerabildern erfolgt ist,
- Figur 4: ein Bild der virtuellen Kamera, welches mittels des erfindungsgemäßen Verfahrens in der ersten Ausführungsform erzeugt wurde,
- Figur 5: ein Bild der virtuellen Kamera, welches mittels des erfindungsgemäßen Verfahrens in einer zweiten Ausführungsform erzeugt wurde.

### Ausführungsformen der Erfindung

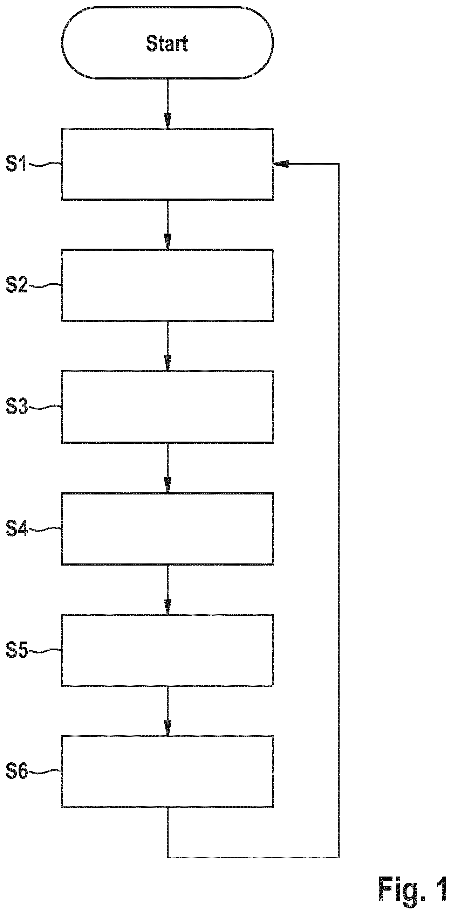

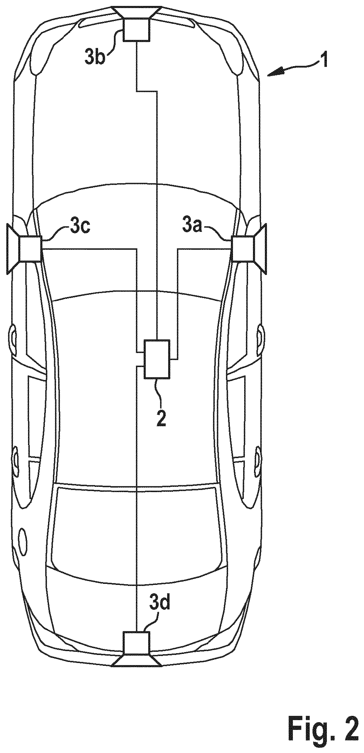

Figur 1 zeigt ein Ablaufdiagramm des erfindungsgemäßen Verfahrens zur Darstellung einer Fahrzeugumgebung eines Fahrzeuges 1 in einer ersten Ausführungsform. Das Verfahren wird durch eine Vorrichtung 2 zur Darstellung einer Fahrzeugumgebung des Fahrzeuges 1 ausgeführt. Das Fahrzeug 1 ist in Figur 2 beispielhaft dargestellt.

An dem Fahrzeug 1 sind eine erste Kamera 3a, eine zweite Kamera 3b, eine dritte Kamera 3c und eine vierte Kamera 3d angeordnet. Jede der Kameras 3a, 3b, 3c, 3d ist mit jeweils einer Fischaugenlinse ausgestattet, um jeweils einen möglichst großen Ausschnitt der Fahrzeugumgebung des Fahrzeuges 1 zu erfassen. Die erste Kamera 3a ist an einem rechten Außenspiegel des Fahrzeuges 1 angeordnet. Eine optische Achse der ersten Kamera 3a ist dabei entlang einer Querachse des Fahrzeuges 1 von dem Fahrzeug 1 weggerichtet. Die zweite Kamera 3b ist an einer Fahrzeugfront des Fahrzeuges 1 angeordnet. Eine optische Achse der zweiten Kamera 3b ist dabei entlang einer Längsachse des Fahrzeuges 1 von dem Fahrzeug weggerichtet. Die dritte Kamera 3c ist an einem linken Außenspiegel des Fahrzeuges 1 angeordnet. Eine optische Achse der dritten Kamera 3c ist dabei entlang der Querachse des Fahrzeuges 1 von dem Fahrzeug weggerichtet. Die vierte Kamera 3d ist an einem Heck des Fahrzeuges des Fahrzeuges 1 angeordnet. Ein optische Achse der vierten Kamera 3d ist dabei entlang der Längsachse des Fahrzeuges 1 von dem Fahrzeug 1 weggerichtet. Jede der Kameras 3a, 3b, 3c, 3d ist über jeweils eine Signalleitung mit der Vorrichtung 2 zur Darstellung der Fahrzeugumgebung des Fahrzeuges 1 gekoppelt. Die Vorrichtung 2 zur Darstellung der Fahrzeugumgebung des Fahrzeuges 1 ist dabei eine digitale Recheneinheit.

Das erfindungsgemäße Verfahren wird gestartet, sobald die Vorrichtung 2 zur Darstellung der Fahrzeugumgebung des Fahrzeuges 1 in Betrieb genommen wird. Nach einem Start des Verfahrens wird ein erster Schritt S1 ausgeführt.

In dem ersten Schritt S1 erfolgt ein Erfassen der Fahrzeugumgebung des Fahrzeuges 1 in Kamerabildern mittels der Kameras 3a, 3b, 3c, 3d. Dabei wird von jeder der Kameras 3a, 3b, 3c, 3d ein Bild erfasst und dieses an die Vorrichtung 2 übertragen. Die Kamerabilder von den Kameras 3a, 3b, 3c, 3d, welche benachbart zueinander an dem Fahrzeug 1 angeordnet sind, überlappen einander und bildet somit in einem Ausschnitt einen gleichen Bereich der Fahrzeugumgebung ab.

Nach dem ersten Schritt S1 wird ein zweiter Schritt S2 ausgeführt.

In dem zweiten Schritt S2 erfolgt ein Projizieren der Kamerabilder auf eine geometrische Projektionsfläche in einem virtuellen Raum. Der virtuelle Raum ist dabei ein mathematischer Raum, der durch die Vorrichtung 2 rechnerisch erzeugt wird. Der virtuelle Raum ist eine mathematische Darstellung des tatsächlichen Raumes um das Fahrzeug 1. Ein virtuelles Modell 14 des Fahrzeuges 1 ist in dem virtuellen Raum angeordnet. Die geometrische Projektionsfläche umhüllt das virtuelle Modell 14 des Fahrzeuges 1 in dem virtuellen Raum.

Die geometrische Projektionsfläche wird basierend auf der Fahrzeugumgebung modelliert. Dazu wird die Fahrzeugumgebung mittels einer Fahrzeugsensorik abgetastet. Die Fahrzeugsensorik ist ein System zur Umfelderfassung des Fahrzeuges 1, welches beispielsweise auf Ultraschallsensoren, Stereokameras oder einem LIDAR-System basiert. Es werden Abstandswerte erfasst, die einen Abstand von Objekten, welche in der Fahrzeugumgebung angeordnet sind, zu dem Fahrzeug 1 beschreiben. Diese Abstandswerte werden in den virtuellen Raum übertragen und ein Abstand der geometrischen Projektionsfläche zu dem virtuellen Modell 14 des Fahrzeuges 1 wird entsprechend den Abstandswerten angepasst.

Bei dem Projizieren der Kamerabilder auf die geometrische Projektionsfläche werden die Kamerabilder der Kameras 3a, 3b, 3c, 3d als Texturen auf die geometrische Projektionsfläche gelegt. Dabei werden die Kamerabilder derart entzerrt, dass die in den Kamerabildern dargestellten tatsächlichen Objekte in der Fahrzeugumgebung an einer Position der geometrischen Projektionsfläche erscheinen, deren Lage gegenüber dem virtuellen Modell 14 des Fahrzeuges 1 einer Lage des tatsächlichen Objektes gegenüber dem Fahrzeug 1 entspricht.

Nach dem zweiten Schritt S2 wird ein dritter Schritt S3 ausgeführt.

In dem dritten Schritt S3 erfolgt ein Errechnen des Bildes 10 der virtuellen Kamera, welches die geometrische Projektionsfläche in dem virtuellen Raum abbildet.

Dazu werden zunächst eine Position und eine Ausrichtung der virtuellen Kamera in dem virtuellen Raum festgelegt. Die Position der virtuellen Kamera sei hier beispielhaft rechts hinter dem Modell 14 des Fahrzeuges 1. Die Kamera ist somit im Bereich eines Hecks des Modells 14 des Fahrzeuges 1 in dem virtuellen Raum angeordnet. Die Ausrichtung der virtuellen Kamera ist beispielhaft entlang einer rechten Seite des Modells 14 des Fahrzeuges 1 in Richtung einer Front des Modells 14 des Fahrzeuges 1 gewählt.

Das Bild der virtuellen Kamera 10 besteht aus einer Matrix von Bildpunkten. Basierend auf der Position und der Ausrichtung der virtuellen Kamera wird für jeden Bildpunkt errechnet, welcher Teil oder Punkt der geometrischen Projektionsfläche in einem Bildpunkt dargestellt wird. Ein Farbwert und/oder Helligkeitswert eines Bildpunktes des Bildes der virtuellen Kamera wird entsprechend einem Farbwert und/oder Helligkeitswert der auf dem entsprechenden Teil oder Punkt der Projektionsfläche angeordneten Textur gewählt.

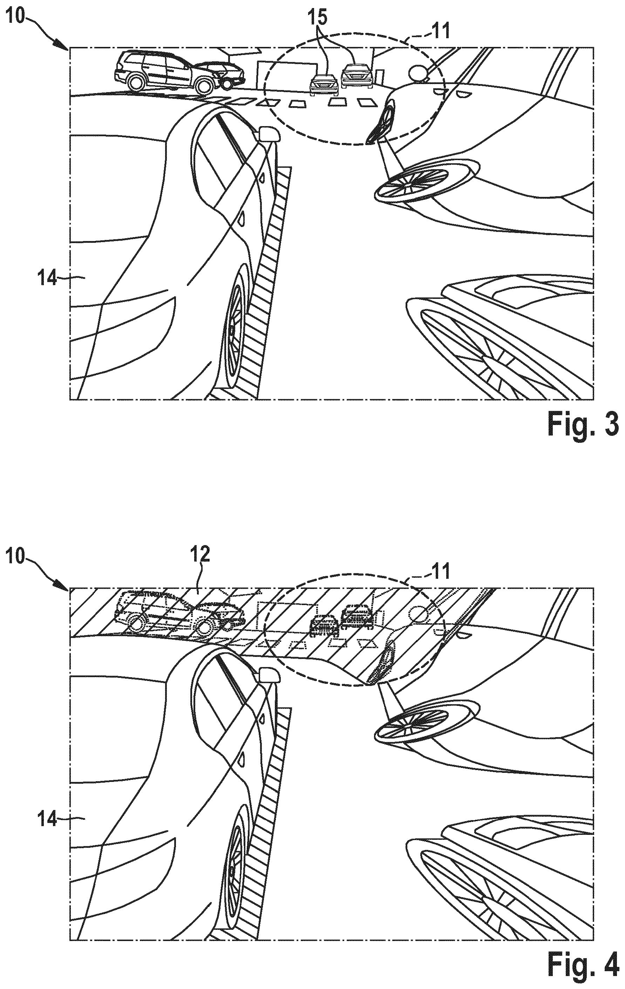

Figur 3 zeigt ein beispielhaftes Bild der virtuellen Kamera, wobei noch kein Weichzeichnen erfolgt ist. In einem linken Bereich des Bildes 10 der virtuellen Kamera ist das virtuelle Modell 14 des Fahrzeuges 1 angeordnet. In dem Bereich um das virtuelle Modell 14 des Fahrzeuges 1 ist die geometrische Projektionsfläche mit den darauf als Texturen abgelegten Kamerabildern erkenntlich. In einem Bereich 11 des Bildes 10 der virtuellen Kamera, der rechts vor dem virtuellem Modell 14 des Fahrzeuges 1 liegt, liegt ein unbeabsichtigter Unterschied zwischen dem Bild der virtuellen Kamera und der durch diese abgebildeten Fahrzeugumgebung vor. Es ist ersichtlich, dass ein einzelnes Fahrzeug 15 doppelt dargestellt ist.

Das einzelne Fahrzeug 15 ist doppelt dargestellt, da dieses einerseits in dem Kamerabild der ersten Kamera 3a und andererseits in dem Kamerabild der zweiten Kamera 3b abgebildet wird. Bei dem Projizieren der Kamerabilder auf die geometrische Projektionsfläche sind die beiden Darstellungen des einzelnen Fahrzeuges 15 nicht an derselben Stelle der geometrischen Projektionsfläche angeordnet worden, da die Form der geometrischen Projektionsfläche nicht vollständig den Formen in der Fahrzeugumgebung entspricht.

Nach dem dritten Schritt S3 wird ein vierter Schritt S4 ausgeführt.

In dem vierten Schritt S4 erfolgt ein Erstellen einer Tiefenkarte für einen Sichtbereich der virtuellen Kamera, welche einen Abstand mehrerer Punkte der geometrischen Projektionsfläche zu der virtuellen Kamera in dem virtuellen Raum beschreibt. Der Sichtbereich der virtuellen Kamera entspricht dem Bereich, der in dem Bild der virtuellen Kamera dargestellt wird.

Für jeden Bildpunkt des Bildes 10 der virtuellen Kamera wird errechnet, welchen Abstand der in diesem Bildpunkt abgebildete Punkt der geometrischen Projektionsfläche zu der Position der virtuellen Kamera hat. Dieser Abstand wird in der Tiefenkarte als ein Abstandswert gespeichert. In dieser Ausführungsform weist die Tiefenkarte also ebenso viele Abstandswerte auf, wie das Bild 10 der virtuellen Kamera Bildpunkte aufweist. Jedem Abstandswert der Tiefenkarte ist ein Bildpunkt des Bildes 10 der virtuellen Kamera zugeordnet.

Die Tiefenkarte wird dabei derart erstellt, dass diese für solche Bereiche des Bildes der virtuellen Kamera, in denen das virtuelle Modell 14 des Fahrzeuges 1 erfasst wird, einen Abstand der in diesen abgebildeten Punkte des virtuellen Modells 14 des Fahrzeuges 1 zu der virtuellen Kamera in dem virtuellen Raum beschreibt. Es wird somit ein Abstandswert, der einen Abstand zwischen dem virtuellen Modell 14 des Fahrzeuges 1 beschreibt, in die Tiefenkarte eingetragen, wenn die geometrische Projektionsfläche für den zugehörigen Bildpunkt von dem virtuellen Modell 14 des Fahrzeuges verdeckt wird.

Nach dem vierten Schritt S4 wird ein fünfter Schritt S5 ausgeführt.

In dem fünften Schritt S5 erfolgt ein Ermitteln eines bestimmten Bereiches 12 des Bildes der virtuellen Kamera basierend auf der Tiefenkarte, in dem die geometrische Projektionsfläche in einem bestimmten Abstandsbereich gegenüber der virtuellen Kamera liegt.

Der bestimmte Abstandsbereich ist in dieser ersten Ausführungsform ein Bereich, der sich außerhalb eines minimalen Abstandes gegenüber der virtuellen Kamera erstreckt. Der minimale Abstand ist ein Abstand in dem virtuellen Raum. Der minimale Abstand ist dabei durch einen Schwellenwert definiert. Jeder der Abstandswerte der Tiefenkarte wird mit dem Schwellenwert verglichen. Liegt ein Abstandswert über dem Schwellenwert, so gehört der diesem Abstandswert zugehörige Bildpunkt des Bildes 10 der virtuellen Kamera zu dem bestimmten Bereich 12. Liegt ein Abstandswert unter dem Schwellenwert oder ist gleich dem Schwellenwert, so gehört der diesem Abstandswert zugehörige Bildpunkt des Bildes der virtuellen Kamera nicht zu dem bestimmten Bereich 12.

Nach dem fünften Schritt S5 wird ein sechster Schritt S6 ausgeführt.

In dem sechsten Schritt S6 erfolgt ein Weichzeichnen des Bildes der virtuellen Kamera in dem Bereich, in dem der bestimmte Bereich 12 abgebildet wird. Dazu wird beispielsweise ein gaußscher Weichzeichner oder ein beliebiger anderer Grafikfilter, der ein Weichzeichnen ermöglicht, auf den bestimmten Bereich 12 des Bildes 10 der virtuellen Kamera angewendet.

Figur 4 zeigt ein Bild 10 der virtuellen Kamera, welches gemäß der ersten Ausführungsform der Erfindung erzeugt wurde. In einem linken Bereich des Bildes der virtuellen Kamera ist das virtuelle Modell 14 des Fahrzeuges 1 angeordnet. In dem Bereich um das virtuelle Modell 14 des Fahrzeuges 1 ist die geometrische Projektionsfläche mit den darauf als Texturen abgelegten Kamerabildern erkenntlich. Im oberen Bereich des Bildes 10 der virtuellen Kamera ist der bestimmte Bereich 12 abgebildet, der weichgezeichnet ist, und einen Bereich der realen Welt abbildet, der vor dem Fahrzeug 1 liegt. Die geometrische Projektionsfläche weist in diesem bestimmten Bereich einen Abstand zu der virtuellen Kamera auf, der gemäß der Tiefenkarte größer als der Schwellenwert ist. Es ist dabei ersichtlich, dass auch der Bereich 11, in welchem der unbeabsichtigte Unterschied liegt, weichgezeichnet wurde.

Nach einem Ausführen des sechsten Schrittes S6 verzweigt das Verfahren zurück in den ersten Schritt S1. Das Verfahren wird somit in einer Schleife ausgeführt. Das Verfahren wird beendet, wenn die Vorrichtung 2 außer Betrieb genommen wird.

Erfindungsgemäß wird somit die Tiefenkarte abhängig von der Position der virtuellen Kamera erzeugt. Zudem wird ein teilweise weichgezeichnetes Abbild der Fahrzeugumgebung erzeugt. Dabei kann eine Bildtiefe entsprechend einem Fokusbereich einer tatsächlichen Kamera angepasst werden. Dieser Effekt kann dynamisch angepasst werden, um ein Verhalten des menschlichen Auges zu simulieren. Dies kann insbesondere dadurch erreicht werden, dass der in dem fünften Schritt S5 genutzte Schwellenwert verändert wird.

Eine zweite Ausführungsform der Erfindung entspricht der ersten Ausführungsform der Erfindung. Dabei umfasst dass erfindungsgemäße Verfahren jedoch zusätzlich einen weiteren Schritt, in dem ein Ausrichten der virtuellen Kamera auf einen bestimmten Punkt von Interesse in dem virtuellen Raum erfolgt. Der bestimmte Punkt von Interesse ist dabei ein Punkt ist, an dem eine Annäherung des Fahrzeuges an ein Objekt erfolgt.

Dazu wird mittels der Abstandssensorik des Fahrzeuges 1 ermittelt, ob eine Annäherung des Fahrzeuges 1 an ein Objekt erfolgt. Der Punkt von Interesse ist hier ein Zentrum des Bereiches der Fahrzeugumgebung, in dem eine Annährung des Objektes an das Fahrzeug 1 erfolgt. Die Position der virtuellen Kamera ist so gewählt, dass diese in dem virtuellen Raum direkt über dem Punkt von Interesse 16 liegt und eine Ausrichtung der virtuellen Kamera ist so gewählt, dass diese aus der Vorgelperspektive auf den Punkt von Interesse 16 herabblickt.

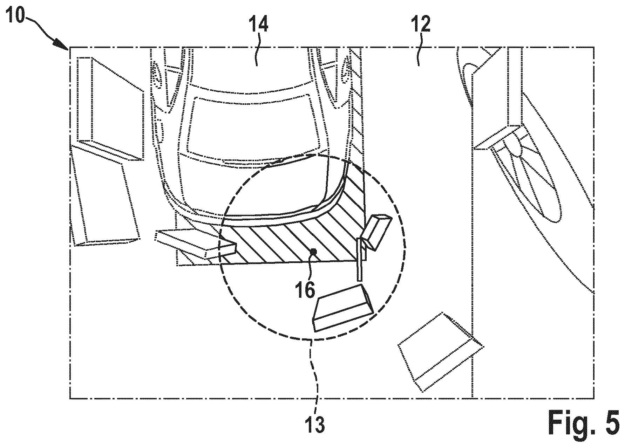

Figur 5 zeigt ein Bild 10 der virtuellen Kamera, welches gemäß der zweiten Ausführungsform der Erfindung errechnet wurde. In dem in Figur 5 gezeigten Bild der virtuellen Kamera ist ein Heck des virtuellen Modells 14 des Fahrzeuges 1 erkenntlich. In einem Fokusbereich 13, der rechts hinter dem virtuellen Modell 14 des Fahrzeuges 1 liegt, erfolgt eine Annäherung des Fahrzeuges 1 an ein Objekt. Der Punkt von Interesse wird im Zentrum dieses Fokusbereichs 13 gesetzt.

Bei der gewählten Position und Ausrichtung der virtuellen Kamera steigt ein Abstand der in diesem Bereich flachen und entsprechend einer Fahrbahnoberfläche angeordneten geometrischen Projektionsfläche gegenüber der virtuellen Kamera mit steigendem Abstand zu dem Punkt von Interesse 16 an. Der Schwellenwert der ersten Ausführungsform ist dabei in dieser zweiten Ausführungsform so gewählt, dass solche Punkte der geometrischen Projektionsfläche, die in dem Fokusbereich 13 liegen, jeweils einen Abstand zu der virtuellen Kamera aufweisen, der unter dem Schwellenwert liegt. Der Fokusierungsbereich 13 entspricht somit einem Bereich der Außerhalb des erfindungsgemäßen bestimmten Bereichs 12 liegt.

Somit wird der Bereich des Bildes 10 der virtuellen Kamera, welche nicht diesen Fokussierungsbereich 13 liegt weichgezeichnet. Somit ist lediglich der Fokussierungsbereich 13 in dem Bild der virtuellen Kamera scharf dargestellt. Eine Aufmerksamkeit des Fahrers wird somit auf diesem Bereich gelenkt.

Es wird darauf verwiesen, dass vordefinierte Bereiche der geometrischen Projektionsfläche bei dem erfindungsgemäßen Verfahren von einem Weichzeichnen ausgeschlossen werden können.

Neben der obigen schriftlichen Offenbarung wird explizit auf die Offenbarung der Figuren 1 bis 5 verwiesen.

## Patentansprüche

1. Verfahren zur Darstellung einer Fahrzeugumgebung eines Fahrzeuges (1), umfassend:
- ein Erfassen der Fahrzeugumgebung in Kamerabildern mittels mehrerer Kameras (3a, 3b, 3c, 3d),
- ein Projizieren der Kamerabilder auf eine geometrische Projektionsfläche in einem virtuellen Raum,
- ein Erstellen einer Tiefenkarte für einen Sichtbereich einer virtuellen Kamera, welche einen Abstand mehrerer Punkte der geometrischen Projektionsfläche zu der virtuellen Kamera in dem virtuellen Raum beschreibt,
- ein Errechnen eines Bildes (10) der virtuellen Kamera, welches die geometrische Projektionsfläche in dem virtuellen Raum abbildet,
- ein Ermitteln eines bestimmten Bereiches des Bildes der virtuellen Kamera basierend auf der Tiefenkarte, in dem die geometrische Projektionsfläche in einem bestimmten Abstandsbereich gegenüber der virtuellen Kamera liegt, wobei der bestimmte Abstandsbereich ein Bereich ist, der sich außerhalb eines minimalen Abstandes gegenüber der virtuellen Kamera erstreckt, und
- ein Weichzeichnen des Bildes (10) der virtuellen Kamera in dem Bereich, in dem der bestimmte Bereich (12) abgebildet wird.

2. Verfahren gemäß Anspruch 1, **dadurch gekennzeichnet, dass** die geometrische Projektionsfläche basierend auf der Fahrzeugumgebung modelliert wird.

3. Verfahren gemäß einem der vorangehenden Ansprüche, **dadurch gekennzeichnet, dass**
- in dem virtuellen Raum ein virtuelles Modell (14) des Fahrzeuges (1) angeordnet ist, und
- die Tiefenkarte derart erstellt wird, dass diese für solche Bereiche des Bildes der virtuellen Kamera, in denen das virtuelle Modell (14) des Fahrzeuges (1) erfasst wird, einen Abstand der in diesen abgebildeten Punkte des virtuellen Modells (14) des Fahrzeuges (1) zu der virtuellen Kamera beschreibt.

4. Verfahren gemäß einem der vorangehenden Ansprüche, ferner umfassend
- ein Ausrichten der virtuellen Kamera auf einen bestimmten Punkt von Interesse in dem virtuellen Raum.

5. Verfahren gemäß Anspruch 4, **dadurch gekennzeichnet, dass** der bestimmte Punkt von Interesse ein Punkt ist, an dem eine Annäherung des Fahrzeuges (1) an ein Objekt erfolgt.

6. Vorrichtung (2), die dazu eingerichtet ist, das Verfahren gemäß einem der vorangehenden Ansprüche auszuführen.

## Claims

1. Method for representing a vehicle environment of a vehicle (1), comprising:
- capturing the vehicle environment in camera images by means of a plurality of cameras (3a, 3b, 3c, 3d),
- projecting the camera images onto a geometric projection surface in a virtual space,
- creating a depth map for a field of view of a virtual camera, which describes a distance of a plurality of points of the geometric projection surface from the virtual camera in the virtual space,
- calculating an image (10) of the virtual camera which images the geometric projection surface in the virtual space,
- ascertaining a specific region of the image of the virtual camera based on the depth map in which the geometric projection surface is located in a specific distance region relative to the virtual camera, wherein the specified distance region is a region extending outside a minimum distance relative to the virtual camera, and
- blurring the image (10) of the virtual camera in the region in which the specific region (12) is imaged.

2. Method according to Claim 1, **characterized in that** the geometric projection surface is modelled based on the vehicle environment.

3. Method according to either of the preceding claims, **characterized in that**
- a virtual model (14) of the vehicle (1) is arranged in the virtual space, and
- the depth map is created in such a way that for those regions of the image of the virtual camera in which the virtual model (14) of the vehicle (1) is captured, it describes a distance of the points of the virtual model (14) of the vehicle (1) which are imaged in these regions from the virtual camera.

4. Method according to any of the preceding claims, further comprising:
- aligning the virtual camera to a specific point of interest in the virtual space.

5. Method according to Claim 4, **characterized in that** the specific point of interest is a point at which the vehicle (1) approaches an object.

6. Apparatus (2) configured to carry out the method according to any of the preceding claims.

## Revendications

1. Procédé de représentation d'un environnement de véhicule d'un véhicule (1), comprenant :
- une capture de l'environnement de véhicule dans des images de caméra au moyen de plusieurs caméras (3a, 3b, 3c, 3d),
- une projection des images de caméra sur une surface de projection géométrique dans un espace virtuel,
- une création d'une carte de profondeur pour une zone de visualisation d'une caméra virtuelle, qui décrit une distance de plusieurs points de la surface de projection géométrique par rapport à la caméra virtuelle dans l'espace virtuel,
- un calcul d'une image (10) de la caméra virtuelle, laquelle représente la surface de projection géométrique dans l'espace virtuel,
- une détermination, sur la base de la carte de profondeur, d'une zone déterminée de l'image de la caméra virtuelle dans laquelle la surface géométrique de projection se trouve dans une plage de distance déterminée par rapport à la caméra virtuelle, la plage de distance déterminée étant une zone qui s'étend à l'extérieur d'une distance minimale par rapport à la caméra virtuelle, et
- un floutage de l'image (10) de la caméra virtuelle dans la zone dans laquelle est représentée la zone déterminée (12).

2. Procédé selon la revendication 1, **caractérisé en ce que** la surface de projection géométrique est modélisée sur la base de l'environnement de véhicule.

3. Procédé selon l'une des revendications précédentes, **caractérisé en ce que**
- un modèle virtuel (14) du véhicule (1) est disposé dans l'espace virtuel, et
- la carte de profondeur est créée de telle sorte qu'elle décrit, pour de telles zones de l'image de la caméra virtuelle dans lesquelles est capturé le modèle virtuel (14) du véhicule (1), une distance des points du modèle virtuel (14) du véhicule (1) représentés dans celles-ci par rapport à la caméra virtuelle.

4. Procédé selon l'une des revendications précédentes, comprenant en outre
- une orientation de la caméra virtuelle vers un point d'intérêt spécifique dans l'espace virtuel.

5. Procédé selon la revendication 4, **caractérisé en ce que** le point d'intérêt déterminé est un point où se produit une approche du véhicule (1) vers un objet.

6. Dispositif (2), qui est conçu pour mettre en œuvre le procédé selon l'une des revendications précédentes.
